Europäisches Patentamt

European Patent Office

Office européen des brevets

(11) Veröffentlichungsnummer: **0 373 288**

**A2**

(12) **EUROPÄISCHE PATENTANMELDUNG**

(21) Anmeldenummer: **89110362.4**

(22) Anmeldetag: **08.06.89**

(51) Int. Cl.⁵: **B60R 21/26**

(30) Priorität: **15.12.88 DE 3842145**

(43) Veröffentlichungstag der Anmeldung:
**20.06.90 Patentblatt 90/25**

(84) Benannte Vertragsstaaten:
**DE FR GB IT SE**

(71) Anmelder: **Bayern-Chemie Gesellschaft für flugchemische Antriebe mit beschränkter Haftung**

**D-8261 Aschau a. Inn(DE)**

(72) Erfinder: **Unterforsthuber, Karl**
**Büchlweg 9**
**D-8024 Oberhaching(DE)**
Erfinder: **König, Rudolf**
**Masurenring 10**
**D-8024 Oberhaching(DE)**

(74) Vertreter: **Frick, Gerhard**
**Messerschmitt-Bölkow-Blohm GmbH**
**Patentabteilung Robert-Koch-Strasse**
**D-8012 Ottobrunn(DE)**

(54) Gasgenerator, insbesondere für den aufblasbaren Schutzsack eines Aufprallschutzsystems für Fahrzeuginsassen.

㊼ Ein Gasgenerator, insbesondere für den aufblasbaren Schutzsack eines Aufprallschutzsystems für Fahrzeuginsassen (Airbag), weist eine Reaktionskammer (1) auf, um welche eine ringförmige Filterkammer (2) angeordnet ist. Die Reaktionskammer (1) ist mit Öffnungen (10 bis 15) zum Übertritt des Treibgases in die Filterkammer (2) versehen, und die Filterkammer (2) mit Öffnungen (22) zum Austritt des Treibgases in den Schutzsack (9). Um einen von der Temperatur möglichst unabhängigen Füllgrad des Schutzsackes (9) zu erreichen, ist der Gesamtquerschnitt der Übertrittsöffnungen (10 bis 15) der Reaktionskammer (1) sowie die durchschnittliche Strömungsweglänge des Treibgases, durch die Filterkammer (2) derart veränderlich, daß sich mit steigender Temperatur der Gesamtquerschnitt der Übertrittsöffnungen (10 bis 15) bzw. die durchschnittliche Strömungsweglänge des Treibgases durch die Filterkammer (2) vergrößert und mit abnehmender Temperatur verkleinert.

FIG. 1

## Gasgenerator, insbesondere für den aufblasbaren Schutzsack eines Aufprallschutzsystems für Fahrzeuginsassen

Die Erfindung bezieht sich auf einen Gasgenerator, insbesondere für den aufblasbaren Schutzsack eines Aufprallschutzsystems für Fahrzeuginsassen (Airbag), mit einer Reaktionskammer, um welche eine ringförmige Filterkammer angeordnet ist, wobei die Reaktionskammer Öffnungen zum Übertritt des Treibgases in die Filterkammer und die Filterkammer Öffnungen zum Austritt des Treibgases in den dem Gasgenerator nachgeschalteten Verbraucher aufweist.

Ein derartiger Gasgenerator ist beispielsweise aus der DE-AS 29 15 209 bekannt. Die Leistung, also die Aufblaszeit und der Füllgrad des Schutzsackes, soll dabei möglichst unabhängig von der Temperatur sein, welche der Gasgenerator beim Zünden des Treibstoffs besitzt. Bei den bekannten Gasgeneratoren ist jedoch eine deutliche Temperaturabhängigkeit gegeben. Das heißt, der Schutzsack wird, wenn die Temperatur des Gasgenerators niedrig ist, also z.B. bei -40° C liegt, deutlich langsamer und vor allem mit einem geringeren Füllgrad aufgeblasen als bei hoher Temperatur.

Andererseits muß das Aufblasverhalten des Luftsackes auch dann zufriedenstellend sein, wenn der Gasgenerator eine hohe Temperatur von z.B. +85° C aufweist. Bei den bekannten Gasgeneratoren ist bei hohen Temperaturen die Aufblaszeit entsprechend kurz und der Füllgrad des Schutzsackes sehr hoch. Demgemäß muß der Schutzsack so ausgebildet werden, daß er auch der Sackbelastung bei hohen Gasgeneratortemperaturen genügt, also relativ aufwendig und schwer.

Ferner gelangen beim Abbrennen des Treibstoffs heiße Partikel von der Reaktionskammer in die Filterkammer, die dort zurückgehalten werden sollen. Der Ausstoß der heißen Partikel aus der Reaktionskammer in die Filterkammer ist ebenfalls von der Temperatur des Gasgenerators abhängig, d.h. bei einer hohen Temperatur von z.B. +85° C tritt ein relativ großer Anteil an heißen Partikeln aus dem Reaktionsraum aus. Dies hat zur Folge, daß der Filter und die Filterkammer entsprechend aufwendig ausgebildet werden müssen, um auch dem relativ hohen Partikelausstoß bei hohen Temperaturen zu genügen.

Aufgabe der Erfindung ist es, einen Gasgenerator zu schaffen, bei dem die Aufblaszeit und der Füllgrad des Schutzsackes sowie der Partikelausstoß aus der Reaktionskammer von der Temperatur möglichst unabhängig sind.

Dies wird erfindungsgemäß durch den im Anspruch gekennzeichneten Gasgenerator erreicht. In den Unteransprüchen sind vorteilhafte Ausgestaltungen der Erfindung wiedergegeben.

Erfindungsgemäß wird also der Gesamtquerschnitt der Übertrittsöffnungen der Reaktionskammer und die durchschnittliche Strömungsweglänge, die das Treibgas von den Übertrittsöffnungen der Reaktionskammer zu den Austrittsöffnungen aus der Filterkammer zurücklegt, in Abhängigkeit von der Temperatur verändert, so daß sich mit steigender Temperatur der Gesamtquerschnitt der Übertrittsöffnungen bzw. die durchschnittliche Strömungsweglänge des Treibgases im Filterraum vergrößert bzw. mit abnehmender Temperatur verkleinert.

Dabei werden erfindungsgemäß vorzugsweise beide Maßnahmen, d.h. die Änderung des Gesamtquerschnitts der Übertrittsöffnungen der Reaktionskammer und die Änderung der Strömungsweglänge in der Filterkammer zugleich durchgeführt.

Es ist jedoch auch möglich, nur eine dieser Maßnahmen durchzuführen, also nur den Gesamtquerschnitt der Übertrittsöffnungen der Reaktionskammer oder nur die Strömungsweglänge in der Filterkammer temperaturabhängig zu ändern, um die Unterschiede in der Aufblaszeit, dem Füllgrad und dem Partikelausstoß zwischen niedrigen und hohen Temperaturen des Gasgenerators zu verringern.

Nachstehend ist eine Ausführungsform der Erfindung anhand der Zeichnung näher erläutert. Darin zeigen:

Fig. 1 einen Querschnitt durch einen Teil eines Gasgenerators und

Fig. 2 und 3 einen Schnitt entlang der Linie A-A in Fig. 1 im warmen bzw. kalten Zustand des Gasgenerators, wobei nur ein Teil der Filterkammer dargestellt ist.

Der Gasgenerator weist eine Reaktionskammer 1 auf, welche z.B. zylinder-oder toroidförmig ausgebildet ist. Die Reaktionskammer ist mit einem in der Zeichnung nicht dargestellten Treibstoff gefüllt, der durch eine in der Zeichnung ebenfalls nicht dargestellte, z.B. in der zentralen Achse der Reaktionskammer angeordnete Zündeinrichtung gezündet wird, welche durch einen Unfallsensor elektrisch gezündet wird. Um die Reaktionskammer 1 ist konzentrisch eine toroid- oder ringförmige Filterkammer 2 angeordnet.

Das Gehäuse der Reaktionskammer 1 und das Gehäuse der Filterkammer 2 sind dabei entsprechend der DE-AS 29 15 202 aufgebaut, d.h. es ist eine im Querschnitt S-förmige Gehäuseschale 3 vorgesehen, deren innerer Abschnitt 4 mit einem Deckel 5 das Gehäuse der Reaktionskammer 1 bildet, während der andere, äußere, im Querschnitt U-förmige Abschnitt 6 der S-förmigen Gehäuseschale 3 mit einem Abdeckblech 7 das Gehäuse der Filterkammer 2 bildet. Am Umfang des Abdeckblechs 7 ist ein Ringflansch 8 zur Befestigung des Gasgenerators vorgesehen.

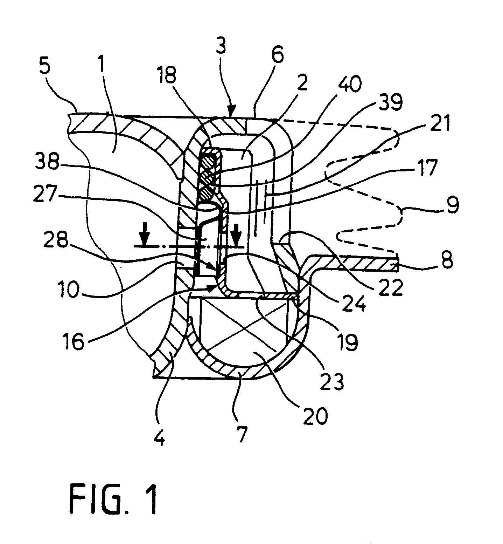

Der Gasgenerator ist nach einer Seite hin durch einen in Fig. 1 gestrichelt dargestellten, zusammengefalteten, aufblasbaren Schutzsack 9 abgedeckt und z.B. im Lenkrad eines Personenkraftwagens untergebracht. Die Erfindung ist jedoch nicht auf diesen Anwendungsfall beschränkt, sondern allgemein zur Druck- und Treibgaserzeugung, etwa zum Aufblasen von Schlauchbooten, geeignet.

In dem Gehäuseabschnitt 4 sind um den Umfang der Reaktionskammer 1 verteilt mehrere Übertrittsöffnungen 10 bis 15 vorgesehen, durch welche das beim Zünden des Treibstoffs in der Reaktionskammer erzeugte Treibgas in die Filterkammer 2 austritt.

In der ringförmigen Filterkammer 2 ist konzentrisch zur Zentralachse des Gaserzeugers eine Umlenkwandung oder ein Umlenkblech 16 vorgesehen, welches einen im wesentlichen zylindrischen Hauptabschnitt 17 aufweist. Von den gegenüberliegenden Seiten des Hauptabschnitts 17 erstreckt sich ein Ringflansch 18 radial nach innen und ein weiterer Ringflansch 19 radial nach außen zu der S-förmigen Gehäuseschale 3 bzw. zum Abdeckblech 7.

Der Raum zwischen dem Außenringflansch 19 und dem Abdeckblech 7 ist mit einem ersten Filter 20 versehen. Ein zweites Filter 21 ist zwischen dem zylindrischen Hauptabschnitt 17 des Umlenkblechs 16 und der Außenwandung 6 des Gehäuses der Filterkammer 2 gebildet. In der Außenwandung 6 sind mehrere um den Umfang verteilte Öffnungen 22 vorgesehen, durch welche das Treibgas von der Filterkammer 2 in den Schutzsack 9 austritt. Der Außenringflansch 19 des Umlenkblechs 16 ist mit mehreren, um den Umfang verteilten Öffnungen 23 versehen, durch welche das Treibgas von dem ersten Filter 20 zum zweiten Filter 21 strömen kann.

Der zylindrische Hauptabschnitt 17 des Umlenkblechs 16 ist mit mehreren, über den Umfang verteilten Durchtrittsöffnungen 24 bis 26 versehen.

Ferner ist in dem Ringraum 27 zwischen der Außenwand der Reaktionskammer 1, also dem inneren Abschnitt 4 der S-förmigen Gehäuseschale 3, und dem Hauptabschnitt 17 des Umlenkblechs 16 ein ringförmiger Schieber 28 drehbar gelagert.

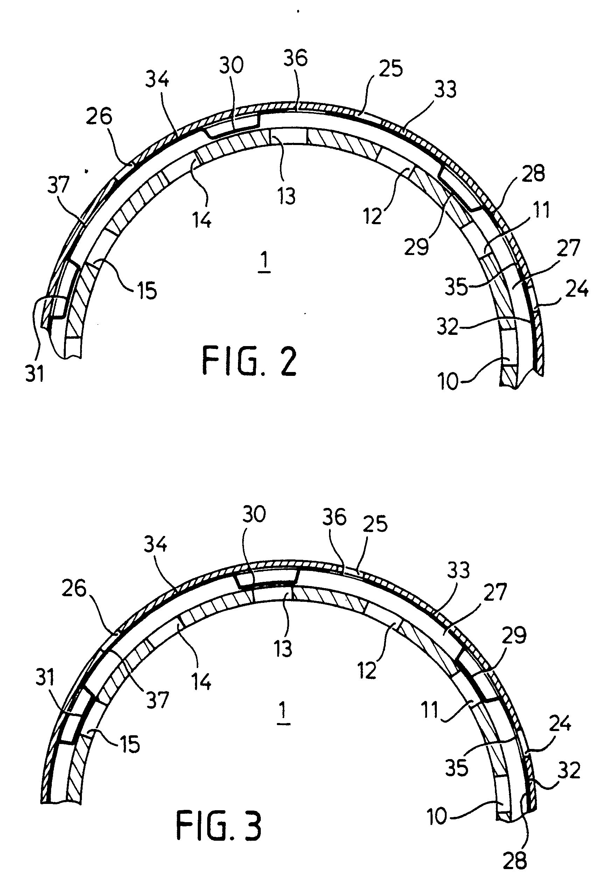

Der Schieber 28 ist als Zylinder ausgebildet und liegt an der Innenseite des zylindrischen Hauptabschnitts 17 des Umlenkblechs 16 an. Dabei ist zumindest einem Teil der Übertrittsöffnungen 10 bis 15, d.h. nach Fig. 2 und 3, jeder zweiten Übertrittsöffnung 11, 13, 15 ein erster Verschlußabschnitt 29, 30 31 am Schieber 28 zugeordnet, ferner jeder Durchtrittsöffnung 24 bis 26 im Umlenkblech 16 ein zweiter Verschlußabschnitt 32, 33, 34, wobei in Umfangsrichtung des Schiebers 28 auf jeden ersten Verschlußabschnitt 29, 30, 31 ein zweiter Verschlußabschnitt 32, 33, 34 folgt.

Die zweiten Verschlußabschnitte 32, 33, 34 weisen jeweils Aussparungen 35, 36, 37 auf, die, wie in Fig. 3 gezeigt, mit den Durchtrittsöffnungen 24 bis 25 in dem Umlenkblech 16 in Deckung gebracht werden können.

Die ersten Verschlußabschnitte 29, 30, 31 sind mit zur Reaktionskammer 1 erstreckenden Vorsprüngen versehen, die, wie in der Zeichnung dargestellt, als Vertiefungen ausgebildet sind, insbesondere, wenn der Schieber 28 aus Stahlblech besteht. Die Aussparungen 35, 36, 37 sind aus dem Schieber 28 ausgestanzt.

An der dem radialen Innenflansch 18 zugewandten Seite weist der Schieber 28 eine Ringschulter 38 auf (Fig. 1). Dadurch wird ein ringförmiger Raum 39 gebildet, der von der Ringschulter 38, dem Umlenkblech 16 und der Reaktionskammeraußenwand umschlossen wird.

Der Schieber 28 wird durch eine Einrichtung betätigt, welche auf Temperaturänderungen anspricht Dazu ist in dem ringförmigen Raum 39 ein Temperaturelement 40 angeordnet, welches aus einem Stab besteht, welcher in z.B. drei Windungen um den inneren Abschnitt 4 der S-förmigen Gehäuseschale 3 gelegt und mit einem Ende am Schieber 28 und mit dem anderen Ende am Umlenkblech 16 oder der Gehäuseschale 3 befestigt ist.

Das Temperaturelement 40 besteht aus einem Material mit großem linearen Wärmeausdehnungskoeffizienten. Das Temperaturelement 40 zieht sich damit bei Temperaturerniedrigung zusammen, während es sich bei Temperaturerhöhung ausdehnt, um auf diese Weise die ersten Verschlußabschnitte 29, 30, 31 und die zweiten Verschlußabschnitte 32, 33, 34 gegenüber den Übertrittsöffnungen 11 13, 15 bzw. den Durchtrittsöffnungen 24 bis 25 in die Schließ- oder Freigabestellung entsprechend der jeweiligen Temperatur zu bringen, welche im Gasgenerator herrscht, wenn der Treibstoff in der Reaktionskammer 1 gezündet wird.

Das Temperaturelement 40 wird in dem ringförmigen Raum 39 geführt. Zugleich wird es in dem ringförmigen Raum 39 vor dem heißen Treibgas und den darin befindlichen heißen Partikeln geschützt. Das Temperaturelement 40 kann beispielsweise aus Polyethylen bestehen.

Durch den Schieber 28 wird in Abhängigkeit von der Temperatur der Gesamtquerschnitt aller Übertrittsöffnungen 10 bis 15 von der Reaktionskammer 1 in die Filterkammer 2 geändert, und zwar derart, daß bei einer vorgegebenen Höchsttemperatur von beispielsweise +85° C gemäß Fig. 2 der Gesamtquerschnitt der Übertrittsöffnungen 10 bis 15 am größten ist, also die ersten Verschlußabschnitte 29, 30, 31 alle Übertrittsöffnungen 10 bis 15 freigeben, während bei einer vorgegebenen Tiefsttemperatur von z.B. -40° C gemäß Fig. 3 die Verschlußabschnitte 29, 30, 31 die Übertrittsöffnungen 11, 13, 15 verschließen.

Dadurch wird im kalten Zustand des Gasgenerators gemäß Fig. 3 beim Abbrennen des Treibstoffs, in der Reaktionskammer 1 ein höherer Druck aufgebaut. Durch diese Druckerhöhung wird das Abbrennen des Treibstoffs in der Reaktionskammer 1 beschleunigt mit der Folge, daß die Aufblaszeit des Schutzsackes 9 verkürzt und heißeres Treibgas, d.h. ein größeres Treibgasvolumen, dem Schutzsack 9 zugeführt wird, verglichen mit einem Gasgenerator, bei dem die Übertrittsöffnungen von der Reaktionskammer in die Filterkammer 2 einen konstanten Gesamtquerschnitt aufweisen, d.h. einen Gesamtquerschnitt, der sich nicht mit der Temperatur ändert.

Zugleich wird durch den Schieber 28 die durchschnittliche Strömungsweglänge des Treibgases durch die Filterkammer 2, also von den Übertrittsöffnungen 10 bis 15 zu den Austrittsöffnungen 22, in Abhängigkeit von der Temperatur geändert, und zwar derart, daß im kalten Zustand, also bei der vorgegebenen Tiefsttemperatur, die Verschlußabschnitte 32, 33, 34 mit ihren Aussparungen 35, 36, 37 die Durchtrittsöffnungen 24 bis 26 in dem Umlenkblech 16 freigeben, so daß das durch die Übertrittsöffnungen 10 bis 15 aus der Reaktionskammer 1 austretende Treibgas über die Durchtrittsöffnungen 24 bis 26 im Umlenkblech 16 direkt zu dem zweiten Filter 21 und dann zu den Austrittsöffnungen 22 strömt, also einen kürzeren Strömungsweg nimmt, als wenn es bei durch die Verschlußabschnitte 32, 33, 34 verschlossenen Durchtrittsöffnungen 24 bis 26 durch das Umlenkblech 16 zu dem ersten Filter 20 und von dort über die Durchtrittsöffnungen 23 über den zweiten Filter 21 zu den Austrittsöffnungen 22 gelangt.

Auf diese Weise strömt das Treibgas im kalten Zustand des Gasgenerators gemäß Fig. 3 relativ ungekühlt, also mit hoher Temperatur und einem entsprechend hohen Volumen in den Schutzsack 9, wodurch dessen Füllgrad entsprechend erhöht wird.

Demgegenüber sind im warmen Zustand des Gasgenerators, also bei der vorgegebenen Höchsttemperatur von z.B. +85° C, die Durchtrittsöffnungen 24 bis 26 durch die zweiten Verschlußabschnitte 32, 33, 34 geschlossen, so daß das heiße Treibgas durch das Umlenkblech 16 zu dem ersten Filter 20 und von dort über die Öffnungen 23 in dem radialen Außenringflansch 19 zu dem zweiten Filter 21 strömt, wodurch es relativ stark abgekühlt wird.

Im warmen Zustand gemäß Fig. 2 gibt der Schieber 28 zugleich alle Übertrittsöffnungen 10 bis 15 aus der Reaktionskammer frei, so daß der Druck in der Reaktionskammer 1 gesenkt wird. Die Folge ist eine Herabsetzung der Temperatur des Treibgases und damit des Druckes im Schutzsack 9 sowie der Aufblaszeit des Schutzsackes 9 und des Partikelausstoßes aus der Reaktionskammer 1.

Im kalten Zustand gemäß Fig. 3 ist demgegenüber ein Teil, nämlich nach Fig. 2 und 3 die Hälfte der Übertrittsöffnungen 10 bis 15, durch den Schieber 28 geschlossen, während die Durchtrittsöffnungen 24 bis 26 im Umlenkblech 16 freigegeben sind, wodurch der Druck in der Reaktionskammer 1 erhöht wird, und das einen relativ hohen Druck aufweisende Treibgas verhältnismäßig ungekühlt in den Schutzsack 9 gelangt, also die Temperatur des Treibgases und damit der Druck im Schutzsack 9 erhöht und die Aufblaszeit des Schutzsackes 9 verkürzt wird.

Der Schieber 28 kann, wie erwähnt, aus Stahlblech bestehen, er kann jedoch auch aus einem anderen Material gefertigt sein, beispielsweise aus Polytetrafluorethylen oder Aluminiumguß.

Vorteilhaft ist es, die Vorsprünge der ersten Verschlußabschnitte 30, 31, 32 und die Öffnungen 36, 37, 38 der zweiten Verschlußabschnitte 33, 34, 35 rechteckig, also mit geraden Schließkanten auszubilden. Dadurch wird eine relativ lineare Regelung des gesamten Querschnitts der Übertrittsöffnungen 10 bis 15 bzw. des durchschnittlichen Strömungsweges durch die Filterkammer 2 in Abhängigkeit von der Temperatur erreicht. Aus diesem Grunde können die Übertrittsöffnungen 10 bis 15 und/oder die Durchtrittsöffnungen 24 bis 26 in dem Umlenkblech 16 gleichfalls rechteckig ausgebildet sein.

## Ansprüche

1. Gasgenerator, insbesondere für den aufblasbaren Schutzsack eines Aufprallschutzsystemns für Fahrzeuginsassen, mit einer Reaktionskammer, um welche eine ringförmige Filterkammer angeordnet ist, wobei die Reaktionskammer Öffnungen zum Übertritt des Treibgases in die Filterkammer und die Filterkammer Öffnungen zum Austritt des Treibgases in den dem Gasgenerator nachgeschalteten Verbraucher aufweist, **dadurch gekennzeichnet,** daß in Abhängigkeit von der Temperatur der Gesamtquerschnitt der Übertrittsöffnungen (10 bis 15) der Reaktionskammer (1) und/oder die durchschnittliche Strömungsweglänge des Treibgases durch die Filterkammer (2) derart veränderbar ausgebildet ist, daß sich mit steigender Temperatur der Gesamtquerschnitt der Übertrittsöffnungen (10 bis 15) bzw. die durchschnittliche Strömungsweglänge des Treibgases durch die Filterkammer (2) vergrößert und mit abnehmender Temperatur verkleinert.

2. Gasgenerator nach Anspruch 1, **dadurch gekennzeichnet,** daß zur Veränderung des Gesamtquerschnitts der Übertrittsöffnungen (10 bis 15) der Reaktionskammer (1) um die Reaktionskammer (1) ein ringförmiger Schieber (28) drehbar gelagert ist, der Verschlußabschnitte (29 bis 31) aufweist, die in Schließstellung die Übertrittsöffnungen (10 bis 15) der Reaktionskammer (1) zumindest teilweise verschließen und in der Freigabestellung die Übertrittsöffnungen (10 bis 15) freigeben, wobei eine Einrichtung vorgesehen ist, welche auf Temperaturänderungen anspricht und die Verschlußabschnitte (29 bis 31) des Schiebers (28) bei einer vorgegebenen hohen Temperatur in die Freigabestellung und bei einer vorgegebenen niedrigen Temperatur in die Schließstellung dreht.

3. Gasgenerator nach Anspruch 1, **dadurch gekennzeichnet,** daß in der Filterkammer (2) eine ringförmige Wandung (16) zur Umlenkung der Strömungsrichtung der Treibgase vorgesehen ist, und zur Veränderung der durchschnittlichen Strömungsweglänge des Treibgases durch die Filterkammer (2) um die Umlenkwandung (16) ein ringförmiger Schieber (28) drehbar gelagert ist, der Verschlußabschnitte (32 bis 34) aufweist, die in der Umlenkwandung (16) vorgesehene Durchtrittsöffnungen (24 bis 26) für das Treibgas in der Schließstellung zumindest teilweise verschließen und in der Freigabestellung freigeben, wobei eine Einrichtung vorgesehen ist, welche auf Temperaturänderungen anspricht und die die die Verschlußabschnitte (32, 33, 34) des Schiebers (28) bei einer vorgegebenen hohen Temperatur in die Schließstellung und bei einer vorgegebenen niedrigen Temperatur in die Freigabestellung dreht.

4. Gasgenerator nach Anspruch 2 oder 3, **gekennzeichnet** durch einen einzigen Schieber (28) zur Veränderung des Gesamtquerschnitts der Übertrittsöffnungen (10 bis 15) der Reaktionskammer (2) und zur Veränderung der durchschnittlichen Strömungsweglänge des Treibgases durch die Filterkammer (2), welcher zum Verschließen der Übertrittsöffnungen (10 bis 15) der Reaktionskammer (1) mit ersten Verschlußabschnitten (10 bis 15) und zum Verschließen der Durchtrittsöffnungen (24 bis 26) der Umlenkwandung (16) mit zweiten Verschlußabschnitten (32 bis 34) versehen ist, und durch eine einzige auf Temperaturänderungen ansprechende Einrichtung zur Drehung der ersten Verschlußabschnitte (29 bis 31) bei der vorgegebenen hohen Temperatur in die Freigabestellung der Übertrittsöffnungen (10 bis 15) der Reaktionskammer (1) und der zweiten Verschlußabschnitte (32 bis 34) in die Schließstellung der Durchtrittsöffnungen (24 bis 26) der Umlenkwandung (16) und bei der vorgegebenen niedrigen Temperatur zur Drehung der ersten Verschlußabschnitte (29 bis 31) in die Schließstellung der Übertrittsöffnungen (10 bis 15) der Reaktionskammer (1) und der zweiten Verschlußabschnitte (32 bis 34) in die Freigabestellung der Durchtrittsöffnungen (24 bis 26) der Umlenkwandung (16).

5. Gasgenerator nach Anspruch 4, **dadurch gekennzeichnet,** daß der Schieber (28) als Zylinder ausgebildet ist, welcher an der Umlenkwandung (16) anliegt, wobei die ersten Verschlußabschnitte (29 bis 31) durch sich zu den Übertrittsöffnungen (10 bis 15) der Reaktionskammer (1) erstreckende Vorsprünge gebildet sind, und die zweiten Verschlußabschnitte (32 bis 34) Aussparungen (35 bis 37) aufweisen, welche die Durchtrittsöffnungen (24 bis 26) der Umlenkwandung (16) in der Freigabestellung freigeben.

6. Gasgenerator nach einem der vorstehenden Ansprüche, **dadurch gekennzeichnet,** daß die auf Temperaturänderungen ansprechende Einrichtung durch ein um die Reaktionskammer (1) angeordnetes Temperaturelement (40) gebildet wird, welches seine Länge in Abhängigkeit von der Temperatur ändert, wobei das Temperaturelement (40) mit einem Ende am Schieber (281 und mit dem anderen Ende fest mit der Reaktionskammer (1) verbunden ist.

7. Gasgenerator nach Anspruch 6, **dadurch gekennzeichnet,** daß das Temperaturelement (40) in Windungen um die Reaktionskammer (1) angeordnet ist.

8. Gasgenerator nach Anspruch 7, **dadurch gekennzeichnet,** daß die Umlenkwandung (16) sich über das an der Reaktionskammerwand (4) angeordnete Temperaturelement (40) erstreckt.

9. Gasgenerator nach Anspruch 8, **dadurch gekennzeichnet,** daß der Schieber (28) an der dem Temperaturelement (40) zugewandten Seite eine Ringschulter (38) aufweist, wobei das Temperaturelement (40) in einem ringförmigen Raum (39) angeordnet ist, welcher von der Ringschulter (38) der Umlenkwandung (16) und der Reaktionskammerwand (4) umschlossen ist.

EP 0 373 288 A2

FIG. 1

FIG. 2

FIG. 3